# EUROPEAN PATENT SPECIFICATION

(11) **EP 3 865 738 B1**
(45) Date of publication and mention of the grant of the patent: **25.11.2026**
(21) Application number: 19871761.3
(22) Date of filing: 24.09.2019
(51) Int. Cl.: F16J 15/08, G21D 1/02, G21C 13/028, F16L 23/18, F16J 15/12

(54) **METAL GASKET**
METALLDICHTUNG
JOINT MÉTALLIQUE

(30) Priority: 10.10.2018 JP 2018191437
(43) Date of publication of application: 18.08.2021
(73) Proprietor: VALQUA, Ltd., Shinagawa-ku Tokyo 141-6024 (JP)
(72) Inventor: SATO Koji, Gojo-shi, Nara 637-0014 (JP)
(74) Representative: Schön, Christoph
(86) International application number: PCT/JP2019/037159
(87) International publication number: WO 2020/075484

(56) References cited:
- JP-A- 2001 182 833
- JP-A- 2003 156 147
- JP-A- 2003 156 147
- JP-A- 2005 036 938
- JP-A- 2005 036 938
- JP-A- H09 177 977
- JP-A- H09 264 427
- JP-A- H09 264 427
- JP-A- H11 131 052
- JP-A- H11 131 052
- US-A1- 2002 153 669

## Description

### TECHNICAL FIELD

The present invention relates to a metal gasket. More specifically, the present invention relates to a metal gasket which is used for connecting pipes to each other, for example, in a thermal electric power plant, a nuclear power plant, a steam engine of a steam turbine ship, a petroleum refining line, a petrochemical industry process line, and a semiconductor manufacturing line.

### BACKGROUND ART

As a metal gasket which is excellent in heat resistance, a hollow O-ring metal gasket and a C-ring metal gasket have been proposed (see, for example, Patent Literature 1 and Patent Literature 2). These metal gaskets however have disadvantages such that a fastening force required for sealing flanges is so large. In order to reduce the fastening force of the metal gasket, it can be considered that a protrusion is formed on a seal surface of the metal gasket. When the metal gasket having the protrusion is provided between flanges, and the flanges are tightened, there is a possibility that sealability between the flanges is lowered, because the protrusion is destroyed by tightening the flanges. Also, it is difficult to accurately form the protrusion on the metal gasket. Moreover, since a stress is concentrated on the protrusion of the metal gasket when the flanges are tightened, the flanges may be damaged by the protrusion.

As a metal gasket which can be tightened with a small tightening force, and shows good sealability without providing a protrusion on the seal surface of the metal gasket, a metal gasket having a concave groove on an outer side wall or an inner side wall has been proposed (see, for example, Patent Literature 3). When the metal gasket is provided between flanges, and the flanges are tightened, a tightening force is reduced, and sealability is improved. However, when a thermal history is applied to the metal gasket, the sealability may be lowered.
JP 2005 036938 A discloses a metal gasket having a C-shaped cross section which encloses a metallic coil spring on the inner surface of the cross section in the axial direction.
JP H09 264427 A discloses a metal gasket having a C-shaped cross-section made of metal and an annular elastic member having a circular cross section fitted inside the casing member.
US 2002/153669 A1 discloses a metal gasket having a metal core and an outer envelope, wherein the outer envelope is made of highly ductile materials such as aluminium, gold or copper, wherein the elastic metal core is not present in the recessed circumferential groove of the envelope.
JP H09 177977 A discloses a metal gasket which contains an annular elastic metal core inside at least one sheet of metal coating having a C-shaped section, wherein the elastic metal core is not present in the recessed circumferential groove of the metal coating.
JP H11 131052 A discloses a seal, according to the preamble of claim 1, having a jacket made of a metal with an opening part for preventing a substance generated from a core member from transferring to a space to be sealed on the core member made of an elastic organic polymer such as an O-ring.

### PRIOR ART LITERATURES

### PATENT LITERATURES

Patent Literature 1: Japanese Patent Unexamined Publication No. H9-177976
Patent Literature 2: Japanese Patent Unexamined Publication No. H11-30333
Patent Literature 3: Japanese Patent Unexamined Publication No. 2003-156147

### SUMMARY OF THE INVENTION

### PROBLEMS TO BE SOLVED BY THE INVENTION

The present invention has been made in view of the above-mentioned prior art. An object of the present invention is to provide a metal gasket capable of ensuring sealability between flanges by fastening the flanges with a small fastening force, and capable of ensuring sealability between flanges even when a thermal history is applied to the metal gasket.

### MEANS FOR SOLVING THE PROBLEMS

The present invention relates to a metal gasket as defined in appended claim 1. Preferred embodiments are defined in the dependent claims 2 to 5.

### EFFECTS OF THE INVENTION

According to the present invention, a metal gasket capable of ensuring sealability between flanges by fastening the flanges with a small fastening force, and capable of ensuring sealability between flanges even when a thermal history is applied to the metal gasket is provided.

### BRIEF DESCRIPTION OF THE DRAWINGS

Fig. 1(a) is a schematic side view showing one embodiment of the metal gasket according to the present invention, and Fig. 1(b) is a schematic plan view showing one embodiment of the metal gasket.
Fig. 2 is a schematic cross-sectional view showing one embodiment of the metal gasket in an X-X section shown in Fig. 1(b).
Fig. 3 is a schematic cross-sectional view showing one embodiment of the metal gasket body in the X-X section shown in Fig. 1(b).
Fig. 4 is a schematic cross-sectional view showing another embodiment of the metal gasket in the X-X section shown in Fig. 1(b).
Fig. 5 is a schematic cross-sectional view showing a metal gasket (which does not fall within the scope of the present invention) in the X-X part shown in Fig. 1(b).
Fig. 6 is a schematic explanatory drawing of an evaluation test device for evaluating a gasket used in each of working examples and each of comparative examples.

### MODE FOR CARRYING OUT THE INVENTION

As described above, the metal gasket according to the present invention is defined in appended claim 1 and is a metal gasket which includes a metal gasket body having a recessed circumferential groove on an outer peripheral surface, and an elastic body.

In the metal gasket according to the present invention, the elastic body is arranged in the circumferential groove of the gasket body. An arc-shaped upper seal surface having an upward bulge is formed on a top surface of the gasket body in the vertical cross section of the metal gasket, in which the top surface comes into contact with a material to be sealed. An arc-shaped lower seal surface having a downward bulge is formed on a bottom surface of the gasket body in the vertical cross section of the metal gasket, in which the bottom surface comes into contact with the material to be sealed. An upper notched area is provided on the upper seal surface. A lower notched area is provided on the lower seal surface.

Since the metal gasket according to the present invention has the above-mentioned configuration, the metal gasket exhibits excellent effects such as making it possible to ensure sealability between flanges by fastening the flanges with a small fastening force, and ensure sealability when a thermal history is received.

The metal gasket according to the present invention will be more specifically described below with reference to drawings.

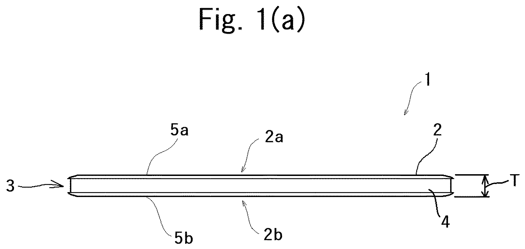

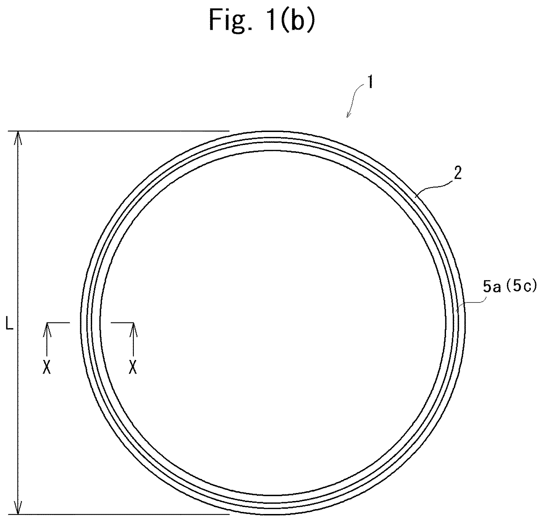

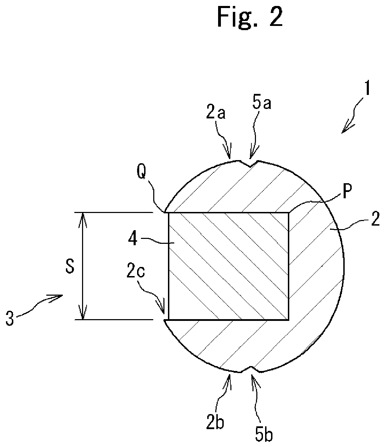

Fig. 1(a) is a schematic side view showing one embodiment of the metal gasket according to the present invention. Fig. 1(b) is a schematic plan view showing one embodiment of the metal gasket. Fig. 2 is a schematic cross-sectional view illustrating one embodiment of the metal gasket in the X-X section shown in Fig. 1(b).

The metal gasket 1 according to the present invention includes a gasket body 2 made of a metal, which has a recessed circumferential groove 3 on an outer peripheral surface thereof, and an elastic body 4, as shown in Fig. 1(a) and Fig. 2. The elastic body 4 is inserted into the circumferential groove 3 of the gasket body 2.

In the embodiment shown in Fig. 2, an arc-shaped upper seal surface 2a having an upward bulge is formed on the top surface of the gasket body 2, in which the top surface comes into contact with a material to be sealed, and an arc-shaped lower seal surface 2b having a downward bulge is formed on the bottom surface of the gasket body 2, in which the bottom surface comes into contact with the material to be sealed. The upper seal surface 2a and the lower seal surface 2b are provided with an upper notched area 5a and a lower notched area 5b, respectively.

The surface hardness (Vickers hardness) of the gasket body 2 is preferably 15 HV or more, and more preferably 19 HV or more, from the viewpoint of ensuring of sealability between flanges by fastening the flanges with a small fastening force. The surface hardness (Vickers hardness) of the gasket body 2 is preferably 250 HV or less, more preferably 220 HV or less, furthermore preferably 175 HV or less, and still furthermore preferably 170 HV or less, from the viewpoint of ensuring of sealability between flanges by fastening the flanges to each other with a small fastening force.

The material of gasket body 2 is preferably a metal selected from the group consisting of aluminum, aluminum alloy, stainless steel, Inconel, carbon steel, lead, gold, silver, copper, nickel, tantalum, chromium molybdenum steel, Monel, titanium and magnesium alloy, more preferably a metal selected from the group consisting of aluminum, aluminum alloy, stainless steel and Inconel, and furthermore preferably aluminum or stainless steel, from the viewpoint of ensuring of sealability between flanges by fastening the flanges with a small fastening force.

The aluminum alloy includes, for example, aluminum-iron alloy, aluminum-copper alloy, aluminum-manganese alloy, aluminum-magnesium alloy, aluminum-zinc alloy, and aluminum-nickel alloy.

The stainless steel includes, for example, SUS304, SUS316, SUS430, SUS630, SUS631, SUS633, and SUS420J2.

A metal other than magnesium, which is used in the magnesium alloy includes, for example, lithium, calcium, aluminum, zinc, titanium, manganese, zirconium, yttrium, tantalum, neodymium, and niobium.

The plane shape of the metal gasket 1 can be annular as shown in Fig. 1(b), or can be polygonal such as square. The plane shape of the metal gasket 1 is usually annular. An outer diameter L of the metal gasket 1 cannot be absolutely determined, because the outer diameter L differs depending on uses of the metal gasket 1. Accordingly, it is preferred that the outer diameter L is appropriately determined in accordance with the uses of the metal gasket 1, and is usually 2 mm to 3 m or so.

The cross-sectional shape of the gasket body 2 in the X-X part shown in Fig. 1(b) is almost circular as shown in Fig. 2. However, the cross-sectional shape of the gasket body 2 can be polygonal. The cross-sectional shape of the gasket body (2) is preferably a circular shape. The circular shape includes a concept which includes not only a true circle shape but also a vertically long elliptical shape, an oblong oval shape, and a track elliptical shape.

In the metal gasket 1 according to the present invention, the arc-shaped upper seal surface 2a having an upward bulge is formed on the top surface of the gasket body 2, and the arc-shaped lower seal surface 2b having a downward bulge is formed on the bottom surface of the gasket body 2. The arc shape includes not only an arc shape of a true circle but also a concept including an arc of a vertically long elliptical shape, an arc of an oblong oval shape and an arc of a track elliptical shape, as well as the cross-sectional shape of the gasket body 2.

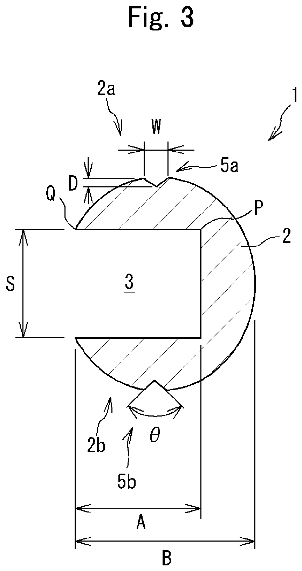

The gasket body 2 is described below with reference to Fig. 3. Fig. 3 is a schematic cross-sectional view showing one embodiment of the gasket body 2 in the X-X part shown in Fig. 1(b).

The upper notched area 5a is provided on the upper seal surface 2a of the gasket body 2 of the metal gasket 1 according to the present invention, and the lower notched area 5b is provided on the lower seal surface 2b of the gasket body 2.

The depth D of each of the upper notched area 5a and the lower notched area 5b cannot be absolutely determined, because the depth D differs depending on the material of the gasket body 2, the size of the gasket body 2. The depth D of each of the upper notched area 5a and the lower notched area 5b is preferably 0.1 to 3 mm, more preferably 0.3 to 2 mm, and furthermore preferably 0.5 to 1 mm, respectively, from the viewpoint of obtaining the metal gasket 1 which enables to ensure sealability between flanges by fastening the flanges with a small fastening force, and which enables to ensure sealability even when a thermal history is applied to the metal gasket 1. Incidentally, as shown in Fig. 3, the depth D of the upper notched area 5a or the lower notched area 5b means a distance between a tangential line at the end point of the upper notched area 5a or the end point of the lower notched area 5b, and a line which is parallel to the tangential line and which contacts with the bottom of the upper notched area 5a or the bottom of the lower notched area 5b, respectively.

The width W of each of the upper notched area 5a and the lower notched area 5b cannot be absolutely determined, because the width W differs depending on the material used for the gasket body 2, the size of the gasket body 2. The width W is preferably 0.1 to 3 mm, more preferably 0.3 to 2 mm, and furthermore preferably 0.5 to 1 mm, from the viewpoint of obtaining the metal gasket 1 which enables to ensure sealability between flanges by fastening the flanges with a small fastening force, and which enables to ensure sealability even when a thermal history is applied to the metal gasket 1. Incidentally, as shown in Fig. 3, the width W of the upper notched area 5a or the lower notched area 5b means a distance between two end points of the upper notched area 5a or two end points of the lower notched area 5b, respectively, and the width W is obtained by drawing a tangential line which contacts with two end points of the upper notched area 5a or two end points of the lower notched area 5b, and drawing two lines from two end points of the upper notched area 5a or two end points of the lower notched area 5b so that two lines are perpendicular to the tangential line, and determining the distance between two lines perpendicular to the tangential line.

It is preferred that each of the upper notched area 5a and the lower notched area 5b is a V-shaped notched area, respectively as shown in Fig. 3, from the viewpoint of obtaining the metal gasket 1 capable of ensuring sealability between flanges by fastening the flanges with a small fastening force, and capable of ensuring sealability between flanges even when a thermal history is applied to the metal gasket 1. An angle θ of the groove of the V-shaped notched area is preferably 20° or more, more preferably 40° or more, and furthermore preferably 45° or more, from the viewpoint of obtaining the metal gasket 1 capable of ensuring sealability between flanges by fastening the flanges with a small fastening force, and capable of ensuring sealability between flanges even when a thermal history is applied to the metal gasket 1. The angle θ of the groove of the V-shaped notched area is preferably 180° or less, more preferably 160° or less, further preferably 140° or less, and furthermore preferably 120° or less, from the viewpoint of obtaining the metal gasket 1 capable of ensuring sealability between flanges by fastening the flanges with a small fastening force, and capable of ensuring sealability between flanges even when a thermal history is applied to the metal gasket 1.

In the upper notched area 5a and the lower notched area 5b, the bottom of the V-shaped notched area may have an acute angle as shown in Fig. 3. Alternatively, the bottom of the V-shaped notched area can be flat or arcuate. It is preferred that the bottom of the V-shaped notched area has an acute angle from the viewpoint of ensuring sealability between flanges by fastening the flanges with a small fastening force.

It is preferred that the deepest position of each of the upper notched area 5a and the lower notched area 5b in the horizontal direction of the metal gasket 1 exists between the innermost end P of the inner side wall of the circumferential groove 3 and the inlet part Q of the circumferential groove 3 as shown in Fig. 3, from the viewpoint of obtaining the metal gasket 1 capable of ensuring sealability between flanges by fastening the flanges with a small fastening force, and ensuring sealability between flanges even when a thermal history is applied to the metal gasket 1.

The circumferential groove 3 for inserting the elastic body 4 is formed inside the gasket body 2. In the embodiments shown in Fig. 2 and Fig. 3, each of the upper wall (not shown in the figure) and the lower wall (not shown in the figure) inside the circumferential groove 3 is formed to be horizontal to the gasket body 2, respectively. However, each of the upper wall and the lower wall does not necessarily have to be formed to be horizontal to the gasket body 2, and can be a flat surface having an inclination (taper) with respect to the horizontal direction of the gasket body 2.

The minimum thickness of the inner side wall of the gasket body 2 at the innermost end P of the circumferential groove 3 cannot be absolutely determined, because the minimum thickness differs depending on uses of the metal gasket 1 according to the present invention. The minimum thickness of the inner side wall of the gasket body 2 at the innermost end P of the circumferential groove 3 is preferably 1 mm or more, more preferably 1.5 mm or more, and furthermore preferably 2 mm or more, from the viewpoint of obtaining the metal gasket 1 capable of ensuring sealability between flanges by fastening the flanges with a small fastening force, and ensuring sealability between flanges even when a thermal history is applied to the metal gasket 1. The maximum thickness of the gasket body 2 at the innermost end P of the circumferential groove 3 cannot be absolutely determined, because the maximum thickness differs depending on uses of the metal gasket 1 according to the present invention. The maximum thickness of the inner side wall of the gasket body 2 at the innermost end P of the circumferential groove 3 is preferably 15 mm or less, more preferably 10 mm or less, and furthermore preferably 5 mm or less, from the viewpoint of obtaining the metal gasket 1 capable of ensuring sealability between flanges by fastening the flanges with a small fastening force, and ensuring sealability between flanges even when a thermal history is applied to the metal gasket 1.

The inner surfaces (not shown in the figure) of the circumferential groove 3 of the gasket body 2 shown in Fig. 3 are formed to be flat. However, the inner surfaces are not necessarily formed to be flat, and may be formed to be a curved surface such as an arcuate curved surface, a corrugated curved surface, or an uneven curved surface.

The width S of the opening of a circumferential groove 3 cannot be absolutely determined, because the width S differs depending on uses of the metal gasket 1 according to the present invention. It is preferred that the width S is 30 to 85% of the thickness T of the gasket body 2 of the metal gasket 1 shown in Fig. 1(a), from the viewpoint of obtaining the metal gasket 1 capable of ensuring sealability between flanges by fastening the flanges with a small fastening force, and ensuring sealability between flanges even when a thermal history is applied to the metal gasket 1.

The thickness T of the gasket body 2 cannot be absolutely determined, because the thickness T differs depending on uses of the metal gasket 1. It is preferred that the thickness T of the gasket body 2 is appropriately determined in accordance with uses of the metal gasket 1, and is usually 1.5 to 15 mm or so.

In Fig. 3, the length B of the gasket body 2 in the horizontal direction cannot be absolutely determined, because the length B differs depending on uses of the metal gasket 1. Accordingly, it is preferred that the length B is appropriately determined in accordance with uses of the metal gasket 1, and is usually 1 to 15 mm or so.

A value of the ratio of the depth A of the circumferential groove 3 of the gasket body 2 to the length B of the gasket body 2 in the horizontal direction (depth A of the circumferential groove/length B in horizontal direction) is preferably 0.1 or more, more preferably 0.2 or more, further preferably 0.3 or more, furthermore preferably 0.4 or more, and even more preferably 0.5 or more, from the viewpoint of ensuring sealability between flanges by fastening the flanges with a small fastening force. The value of the ratio is preferably 0.95 or less, more preferably 0.9 or less, further preferably 0.88 or less, and furthermore preferably 0.86 or less, from the viewpoint of increase in mechanical strength of the gasket body 2, and ensuring sealability between flanges by fastening the flanges with a small fastening force.

The elastic body 4 is arranged in the circumferential groove 3 of the gasket body 2 as shown in Fig. 2. The material used for the elastic body 4 includes, a rubber such as fluorocarbon rubber, silicone rubber, butadiene rubber, styrene-butadiene rubber, acrylonitrile-butadiene rubber, styrene-butadiene rubber, chloroprene rubber and natural rubber; or a thermoplastic elastomer such as olefinic thermoplastic elastomer, ester-based thermoplastic elastomer, styrene-based thermoplastic elastomer and vinyl chloride-based thermoplastic elastomer. Among these materials used for the elastic body 4, the fluorocarbon rubber and the silicone rubber are preferable from the viewpoint of obtaining the metal gasket 1 excellent in thermal resistance, and capable of ensuring sealability between flanges by fastening the flanges with a small fastening force, and ensuring sealability between flanges even when a thermal history is applied to the metal gasket 1. Incidentally, as the elastic body 4, a coil spring can be used.

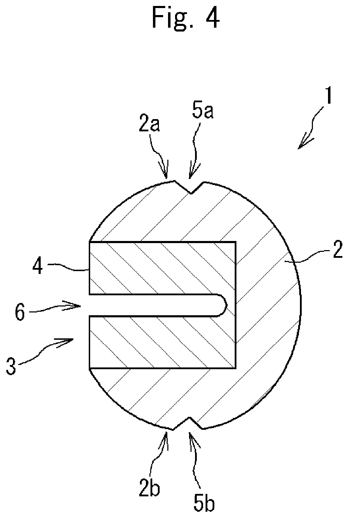

The elastic body 4 has a shape corresponding to the internal shape of the circumferential groove 3 of the gasket body 2. The elastic body 4 shown in Fig. 2 is disposed in the circumferential groove 3 to come into contact with the inner wall of the circumferential groove 3 of the gasket body 2. However, a gap may be provided between the elastic body 4 and the inner surface of the circumferential groove 3, for example, by forming an uneven shape on the surface of the elastic body 4, or deforming the shape of the elastic body 4 into a shape such as a circle or a triangle as a cross-sectional shape. In addition, the elastic body 4 may be provided with a dent 6 as occasion demands, from the viewpoint of increase in flexibility of the elastic body 4. Incidentally, Fig. 4 is a schematic sectional view showing another embodiment of the metal gasket 1 in the X-X part shown in Fig. 1(b).

The elastic body 4 may be arranged so that the whole inner part of the circumferential groove 3 of the gasket body 2 is filled with the elastic body 4. Alternatively, the elastic body 4 may be arranged in the circumferential groove 3 so that an edge 2c is formed at the inlet part Q of the circumferential groove 3 of the gasket body 2 as shown in Fig. 2.

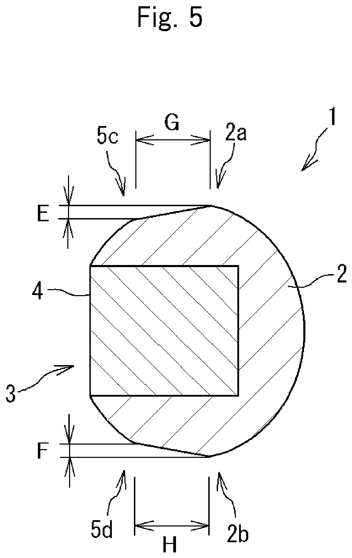

As metal gasket 1 (which does not fall within the scope of the present invention), the metal gasket 1 shown in Fig. 5 can be cited. Fig. 5 is a schematic cross-sectional view showing a metal gasket 1 in the X-X part shown in Fig. 1(b).

In the embodiments shown in Fig. 2 to Fig. 4, the upper notched area 5a is provided on the upper seal surface 2a, and the lower notched area 5b is provided on the lower seal surface 2b. On the other hand, as shown in Fig. 5, the upper flat surface 5c is provided on the upper seal surface 2a, and the lower flat surface 5d is provided on the lower seal surface 2b. In the embodiments of the present invention, the upper seal surface 2a is provided with the upper notched area 5a, and the lower seal surface 2b is provided with the lower notched area 5b, from the viewpoint of ensuring sealability between flanges by tightening the flange with a small fastening force.

The upper flat surface 5c and the lower flat surface 5d may be provided to be parallel to the upper seal surface 2a and the lower seal surface 2b, respectively. Alternatively, the upper flat surface 5c and the lower flat surface 5d may be provided to be inclined with respect to the upper seal surface 2a and the lower seal surface 2b, respectively, as shown in Fig. 5. It may be preferred that the upper flat surface 5c and the lower flat surface 5d are provided to be inclined with respect to the upper seal surface 2a and the lower seal surface 2b, respectively, from the viewpoint of ensuring sealability between flanges by fastening the flanges with a small fastening force. In this case, each of the length E from the upper end of the upper flat surface 5c to the lower end of the upper flat surface 5c in the vertical direction, and the length F from the upper end of the lower flat surface 5d to the lower end of the lower flat surface 5d in the vertical direction is preferably 0.1 to 3 mm, more preferably 0.3 to 2 mm, and furthermore preferably 0.5 to 1 mm, respectively, from the viewpoint of ensuring sealability between flanges by fastening the flanges with a small fastening force. In addition, each of the length G from the upper end of the upper flat surface 5c to the lower end of the upper flat surface 5c in the horizontal direction, and the length H from the upper end of the lower flat surface 5d to the lower end of the lower flat surface 5d in the horizontal direction is preferably 0.1 to 3 mm, more preferably 0.3 to 2 mm, and furthermore preferably 0.5 to 1 mm, from the viewpoint of ensuring sealability between flanges by fastening the flanges with a small fastening force.

The metal gasket 1 according to the present invention being configured as described above can ensure sealability between flanges by fastening the flanges with a small fastening force, and can ensure sealability even when a thermal history is applied to the metal gasket 1. Accordingly, the metal gasket 1 according to the present invention can be suitably used for connecting pipes to each other in, for example, a thermal electric power plant, a nuclear power plant, a steam engine of a steam turbine ship, a petroleum refining line, a petrochemical industry process line, and a semiconductor manufacturing line.

### EXAMPLES

Next, an embodiment of the metal gasket according to the present invention will be more specifically described based on working examples.

### Example 1

As a metal gasket body, a metal gasket body (surface hardness: 22 HV) made of aluminum, having a shape shown in Fig. 1 to Fig. 3 was used.

More specifically, in the metal gasket 1 shown in Fig. 1(a) and Fig. 1(b), the gasket body 2 had an outer diameter L of 75 mm in the plan view of the gasket body 2, and a thickness T of 3.5 mm. In the metal gasket 1 shown in Fig. 2, the width S of the opening of the circumferential groove 3 was 2.5 mm, and the minimum thickness of the gasket body 2 at the innermost end P of the inner side wall of the circumferential groove 3 was 0.3 mm. In the metal gasket body 2 shown in Fig. 3, the depth A of the circumferential groove 3 was 3 mm; the length B in the horizontal direction was 3.5 mm; the value of the ratio of the depth A to the length B in the horizontal direction (depth A of the circumferential groove 3/length B in horizontal direction) was 0.86; each width W of the upper notched area 5a and the lower notched area 5b was 4 mm, respectively; each depth D of the upper notched area 5a and the lower notched area 5b was 2 mm, respectively; and each angle θ of the groove of the V-shaped notched area of the upper notched area 5a and the lower notched area 5b was 110°, respectively.

A metal gasket 1 was manufactured by inserting an elastic body 4 made of fluorocarbon rubber, having a shape shown in Fig. 2 into the circumferential groove 3 of the gasket body 2.

As the physical properties of the metal gasket 1 obtained in the above, necessary force for fastening, sealability, and sealability after thermal history were evaluated in accordance with the following methods. The results thereof are shown in Table 1.

### (1) Necessary force for fastening

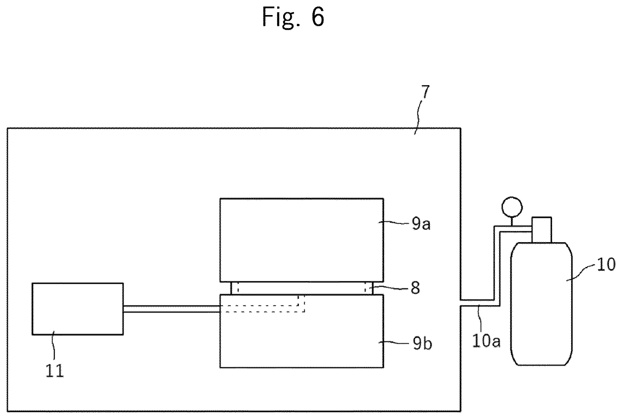

The necessary force for fastening was evaluated by using an evaluation test device 7 of a gasket shown in Fig. 6. Fig. 6 is a schematic explanatory drawing of an evaluation test device 7 of a gasket.

A gasket 8 was provided between a test platen 9a and a test platen 9b, and moved distance of the test platen 9a was determined by means of a dial gauge while the gasket 8 was compressed. A compression ratio was determined in accordance with the equation:
[Compression ratio] = [(Initial height of gasket 8) - (Height of gasket 8 after compression)] ÷ [Initial height of gasket 8] × 100. When the compression ratio reached 17%, a compression load was determined, and the compression load was regarded as a necessary force for fastening. The necessary force for fastening was evaluated in accordance with the following evaluation criteria. Incidentally, the compressive load at which the compression ratio reached 17% means a compression load necessary for eliminating a gap between the gasket 8, and the test platens 9a, 9b (necessary force for fastening).

### [Evaluation criteria]

⊚: Necessary force for fastening (Compression load) is less than 50 kN/m.
○: Necessary force for fastening (Compression load) is 50 kN/m or more, and less than 80 kN/m.
△: Necessary force for fastening (Compression load) is 80 kN/m or more, and less than 100 kN/m.
×: Necessary force for fastening (Compression load) is 100 kN/m or more.

### (2) Sealability

When the sealability of a gasket was evaluated, the evaluation test device 7 of a gasket shown in Fig. 6 was used.

First of all, the gasket 8 was provided between the test platen 9a and the test platen 9b in the evaluation test device 7 for evaluating sealability, and a compression load of 25 kN/m was applied to the gasket 8. Thereafter, helium gas was injected from a nozzle 10a of a helium gas cylinder 10 to the evaluation test device 7, to fill the evaluation test device 7 with helium gas having atmospheric pressure.

Next, the pressure inside the gasket was reduced by means of a helium leak detector 11 until a degree of vacuum inside the gasket 8 was 0.1 Pa. When 5 minutes passed after the pressure inside the gasket 8 reached the above degree of vacuum, the leaked amount of helium gas flowed from the outside of the gasket 8 to a space inside the gasket 8 was determined.

The sealability was evaluated in accordance with the following evaluation criteria of sealability based on the leaked amount of helium gas as determined above.

### [Evaluation criteria]

⊚: Leaked amount of helium gas is less than 4×10⁻¹¹ Pa ·m³/s ·m (detection limit).
○: Leaked amount of helium gas is 4×10⁻¹¹ Pa ·m³/s ·m or more, and less than 1×10⁻¹⁰ Pa ·m³/s ·m.
△: Leaked amount of helium gas is 1×10⁻¹⁰ Pa ·m³/s ·m or more, and less than 1×10⁻⁹ Pa ·m³/s ·m.
×: Leaked amount of helium gas is 1 × 10⁻⁹ Pa ·m³/s ·m or more.

### (3) Sealability after thermal history

The gasket was placed in a thermostatic chamber having a temperature of 100°C, and heated at this temperature for 24 hours, to impart a thermal history to the gasket. Thereafter, the gasket was allowed to cool to room temperature, and taken out from the thermostatic chamber.

The gasket to which a thermal history was applied in the above was used, and sealability of the gasket was examined in the same manner as in the above. Whether or not the leakage amount of the helium gas was increased as compared to the leakage amount of the helium gas of the original gasket was confirmed, and sealability after thermal history was evaluated in accordance with the following evaluation criteria.

### [Evaluation criteria]

⊚: No increase of the leakage amount of helium gas is observed.
×: Increase of the leakage amount of the helium gas is observed.

### (4) Comprehensive evaluation

In the evaluation results of the necessary force for fastening, the sealability and the sealability after thermal history, the evaluation of ⊚ was counted as 100 points; the evaluation of ○ was counted as 80 points; the evaluation of △ was counted as 60 points; and the evaluation of × was counted as 0 point. The score of the necessary force for fastening, the sealability and the sealability after thermal history were summed to obtain total points, and the total points were listed in the column of comprehensive evaluation in Table 1.

Incidentally, when the evaluation of × was included in the evaluation results of the necessary force for fastening, the sealability and the sealability after thermal history, the evaluation of "Failure" was listed in the column of the comprehensive evaluation.

### Comparative example 1

In Example 1, a gasket body in which the elastic body was not used was used as a metal gasket.

The necessary force for fastening, the sealability and the sealability after thermal history of the metal gasket were evaluated in the same manner as in Example 1. The results are shown in Table 1.

### Comparative example 2

As a conventional gasket, an O-ring made of fluorocarbon rubber (manufactured by VALQUA, Ltd. under the product number of 4640) was used, and the necessary force for fastening, the sealability and the sealability after thermal history of the gasket were evaluated in the same manner as in Example 1. The results are shown in Table 1.

### Comparative example 3

As a conventional metal gasket, a C-ring metal gasket including a spring (manufactured by VALQUA, Ltd. under the product number of 3645) was used, and the necessary force for fastening, the sealability and the sealability after thermal history of the gasket were evaluated in the same manner as in Example 1. The results are shown in Table 1.

### Comparative example 4

As a conventional gasket, a hollow O-ring metal gasket made of stainless steel (SUS304) (manufactured by VALQUA, Ltd. under the product number of 3640) was used, and the necessary force for fastening, the sealability and the sealability after thermal history of the gasket were evaluated in the same manner as in Example 1. The results are shown in Table 1.

**[Table 1]**

| Ex. No. and Comp. Ex. No. | Necessary force for fastening | | Sealability | | Sealability after thermal history | Comprehensive evaluation |
|---|---|---|---|---|---|---|
| | Compression load (kN/m) | Evaluation | Leaked amount (Pa·m³/s ·m) | Evaluation | | |
| Ex. 1 | 35 | ⊚ | <4×10⁻¹¹ | ⊚ | ⊚ | 300 |
| Comp. Ex. 1 | 40 | ⊚ | <4×10⁻¹¹ | ⊚ | × | Failure |
| Comp. Ex. 2 | 5 | ⊚ | 3.9×10⁻⁷ | × | ⊚ | Failure |
| Comp. Ex. 3 | 300 | × | <4×10⁻¹¹ | ⊚ | ⊚ | Failure |
| Comp. Ex. 4 | 600 | × | <4×10⁻¹¹ | ⊚ | ⊚ | Failure |

From the results shown in Table 1, the metal gasket obtained in Example 1 can eliminate the gap between the metal gasket and the test platen by a low tightening force of 35 kN/m. Accordingly, it can be seen that the metal gasket does not impart tightening marks to a flange even when a soft metal flange such as an aluminum flange is used in tightening, and therefore enhances sealability when the flange is used.

In addition, the metal gasket obtained in Example 1 is excellent in sealability, and there is no change in sealability after a thermal history was imparted to the metal gasket. Accordingly, it is considered that the metal gasket can be suitably used for connecting pipes to each other in a thermal electric power plant, a nuclear power plant, a steam engine of a steam turbine ship, a petroleum refining line, a petrochemical industry process line, and a semiconductor manufacturing line.

On the other hand, it can be seen that the gasket used in each comparative example is inferior in any of the necessary force for fastening, the sealability and the sealability after thermal history of the gasket.

### DESCRIPTION OF SYMBOLS

1: metal gasket
2: gasket body
2a: upper seal surface
2b: lower seal surface
2c: edge
3: circumferential groove
4: elastic body
5a: upper notched area
5b: lower notched area
5c: upper flat surface
5d: lower flat surface
6: dent
7: evaluation test device
8: gasket
9a: test platen
9b: test platen
10: helium gas cylinder
10a: nozzle
11: helium leak detector

## Claims

1. A metal gasket (1) including a metal gasket body (2) having a recessed circumferential groove (3) on an outer peripheral surface, and an elastic body (4),
wherein the elastic body (4) is arranged in the recessed circumferential groove (3) of the gasket body (2),
wherein an arc-shaped upper seal surface (2a) having an upward bulge is formed on a top surface of the gasket body (2) in the vertical cross section of the metal gasket (1), in which the top surface is configured to come into contact with a material to be sealed,
wherein an arc-shaped lower seal surface (2b) having a downward bulge is formed on a bottom surface of the gasket body (2) in the vertical cross section of the metal gasket (1), in which the bottom surface is configured to come into contact with a material to be sealed,
wherein the elastic body (4) comprises a rubber or a thermoplastic elastomer, **characterized in that**
an upper notched area (5a) is provided on the upper seal surface (2a), and a lower notched area (5b) is provided on the lower seal surface (2b).

2. The metal gasket (1) according to claim 1, wherein a surface hardness of the gasket body (2) is 15 to 250 HV.

3. The metal gasket (1) according to claim 1 or 2, wherein the gasket body (2) is formed from a metal selected from the group consisting of aluminum, aluminum alloy, stainless steel, Inconel, carbon steel, lead, gold, silver, copper, nickel, tantalum, chromium molybdenum steel, Monel, titanium, and magnesium alloy.

4. The metal gasket (1) according to any one of claims 1 to 3, wherein the elastic body (4) comprises a fluorocarbon rubber or a silicone rubber.

5. The metal gasket (1) according to any one of claims 1 to 4, wherein a ratio of a depth of the circumferential groove (3) of the gasket body (2) to a length of the gasket body (2) in a horizontal direction is 0.1 or more and 0.95 or less.

## Patentansprüche

1. Metalldichtung (1), die einen Metalldichtungskörper (2) mit einer zurückstehenden umlaufenden Nut (3) an einer äußeren Umfangsfläche sowie einen elastischen Körper (4) umfasst,
wobei der elastische Körper (4) in der zurückstehenden umlaufenden Nut (3) des Dichtungskörpers (2) angeordnet ist,
wobei im vertikalen Querschnitt der Metalldichtung (1) eine bogenförmige obere Dichtungsfläche (2a), die eine nach oben gerichtete Wölbung aufweist, an der Oberseite des Dichtungskörpers (2) ausgebildet ist, wobei die Oberseite dafür konfiguriert ist, mit einem abzudichtenden Material in Kontakt zu gelangen,
wobei im vertikalen Querschnitt der Metalldichtung (1) eine bogenförmige untere Dichtungsfläche (2b), die eine nach unten gerichtete Wölbung aufweist, an der Unterseite des Dichtungskörpers (2) ausgebildet ist, wobei die Unterseite dafür konfiguriert ist, mit einem abzudichtenden Material in Kontakt zu gelangen,
wobei der elastische Körper (4) einen Kautschuk oder ein thermoplastisches Elastomer umfasst, **dadurch gekennzeichnet, dass**
ein oberer gekerbter Bereich (5a) an der oberen Dichtungsfläche (2a) vorgesehen ist und
ein unterer gekerbter Bereich (5b) an der unteren Dichtungsfläche (2b) vorgesehen ist.

2. Metalldichtung (1) gemäß Anspruch 1, wobei die Oberflächenhärte des Dichtungskörpers (2) 15 bis 250 HV beträgt.

3. Metalldichtung (1) gemäß Anspruch 1 oder Anspruch 2, wobei der Dichtungskörper (2) aus einem Metall gebildet ist, das aus der Gruppe ausgewählt ist, die aus Aluminium, Aluminiumlegierung, nicht rostendem Stahl, Inconel, Kohlenstoffstahl, Blei, Gold, Silber, Kupfer, Nickel, Tantal, Chrom-Molybdän-Stahl, Monel, Titan und Magnesiumlegierung besteht.

4. Metalldichtung (1) gemäß einem der Ansprüche 1 bis 3, wobei der elastische Körper (4) einen Fluorkohlenstoffkautschuk oder einen Silikonkautschuk umfasst.

5. Metalldichtung (1) gemäß einem der Ansprüche 1 bis 4, wobei das Verhältnis der Tiefe der umlaufenden Nut (3) des Dichtungskörpers (2) zu einer Länge des Dichtungskörpers (2) in horizontaler Richtung 0,1 oder mehr und 0,95 oder weniger beträgt.

## Revendications

1. Joint métallique (1) comprenant un corps de joint métallique (2) présentant une rainure circonférentielle en creux (3) sur une surface périphérique extérieure, et un corps élastique (4),
dans lequel le corps élastique (4) est disposé dans la rainure circonférentielle en creux (3) du corps de joint (2),
dans lequel une surface d'étanchéité supérieure en forme d'arc (2a), présentant un renflement vers le haut, est formée sur une surface supérieure du corps de joint (2) dans la coupe transversale verticale du joint métallique (1), dans laquelle la surface supérieure est configurée pour entrer en contact avec un matériau devant être étanchéifié,
dans lequel une surface d'étanchéité inférieure en forme d'arc (2b), présentant un renflement vers le bas, est formée sur une surface inférieure du corps de joint (2) dans la coupe transversale verticale du joint métallique (1), dans laquelle la surface inférieure est configurée pour entrer en contact avec un matériau devant être étanchéifié,
dans lequel le corps élastique (4) comprend un caoutchouc ou un élastomère thermoplastique,
**caractérisé en ce qu'**une zone entaillée supérieure (5a) est prévue sur la surface d'étanchéité supérieure (2a), et une zone entaillée inférieure (5b) est prévue sur la surface d'étanchéité inférieure (2b).

2. Joint métallique (1) selon la revendication 1, dans lequel une dureté de surface du corps de joint (2) est comprise entre 15 et 250 HV.

3. Joint métallique (1) selon la revendication 1 ou la revendication 2, dans lequel le corps de joint (2) est formé à partir d'un métal choisi parmi le groupe comprenant l'aluminium, un alliage d'aluminium, l'acier inoxydable, l'Inconel, l'acier au carbone, le plomb, l'or, l'argent, le cuivre, le nickel, le tantale, l'acier au chrome-molybdène, le Monel, le titane et un alliage de magnésium.

4. Joint métallique (1) selon l'une quelconque des revendications 1 à 3, dans lequel le corps élastique (4) comprend un caoutchouc fluorocarboné ou un caoutchouc silicone.

5. Joint métallique (1) selon l'une quelconque des revendications 1 à 4, dans lequel un rapport entre une profondeur de la rainure circonférentielle (3) du corps de joint (2) et une longueur du corps de joint (2) dans une direction horizontale est compris entre 0,1 ou plus et 0,95 ou moins.
